# EUROPEAN PATENT APPLICATION

(11) **EP 4 310 059 A1**
(43) Date of publication of application: **24.01.2024**
(21) Application number: 22770669.4
(22) Date of filing: 15.03.2022
(51) Int. Cl.: C02F 1/78

(54) **DEVICE FOR DISINFECTING A BEVERAGE IN A CONTAINER**

(30) Priority: 18.03.2021 ES 202130558 U
(71) Applicant: Campos Castillo, Jose Ramon, 03540 Alicante (ES)
(72) Inventor: Campos Castillo, Jose Ramon, 03540 Alicante (ES)
(74) Representative: Donoso Romero, José Luis
(86) International application number: PCT/ES2022/070144
(87) International publication number: WO 2022/195143

(57) **Abstract**

Device (1) for disinfection of a drink (2) in a container (3), that includes:
-an ozone generator(4),
-an impeller (5) of a flow (6) of air, connected to the ozone generator (4), to pass said flow (6) through it,
-a duct (7) arranged at the outlet of the ozone generator (4), to conduct the flow (6) of air with ozone towards the drink (2), and
-where the elements of the device (1) are mounted on a support (8) in the form of a lid or plug, suited to the mouth (30) of the container (3).

## Description

### OBJECT OF THE INVENTION

The present invention relates to a device for the disinfection of a drink in a container.

### BACKGROUND TO THE INVENTION

There are some devices known for disinfecting water in open containers, which include an ozone generator through which a flow of air is passed, which, after having ozone added, is blown through a tube submerged in the water which is in the container.

This implies, firstly, the need for a powerful ozone generator, since the ozone escapes after being bubbled through the liquid, and secondly, the ozone in the air could become an irritant to the mucous membranes, which is a double inconvenience. However, the advantages of the disinfection of the liquid using ozone are attractive, even more so in situations where there is widespread worry about infectious agents, for which reason the invention provides a better use of this medium for the disinfection of a drink.

### DESCRIPTION OF THE INVENTION

The invention's device for disinfecting a drink in a container consists of:
- an ozone generator,
- an air flow impeller, connected to the ozone generator, to pass said flow through it,
- a duct arranged at the outlet of the ozone generator, to conduct the flow of air with ozone towards the drink, and
- where the elements of the device are mounted on a support in the form of a lid or plug suited to the mouth of the container (that is, capable of closing over that mouth).

The duct ideally is of sufficient length to be submerged in the drink, so that the flow of air and ozone is blown into it, and the following advantages are achieved:
- firstly, smaller size and power for the ozone generator and the impeller, which enables them to be integrated into the support in the form of a lid or plug,
- the need for a small power supply, which can even be built into the support, and
- a higher ozone concentration inside the container, with greater disinfection effectiveness.

### BRIEF DESCRIPTION OF THE DRAWINGS

Figures 1 and 2 show perspective views of the device of the invention, as seen from above and below.
Figure 3 shows a view of a thermos with the device of the invention placed in its mouth, covering it.
Figure 4 shows a view of a bottle with the device of the invention placed in its mouth, covering it, and where its interior can be partially seen and how the duct is submerged in the drink.
Figure 5 shows a diagram of the internal elements of the device.

### DESCRIPTION OF A PRACTICAL EMBODIMENT OF THE INVENTION

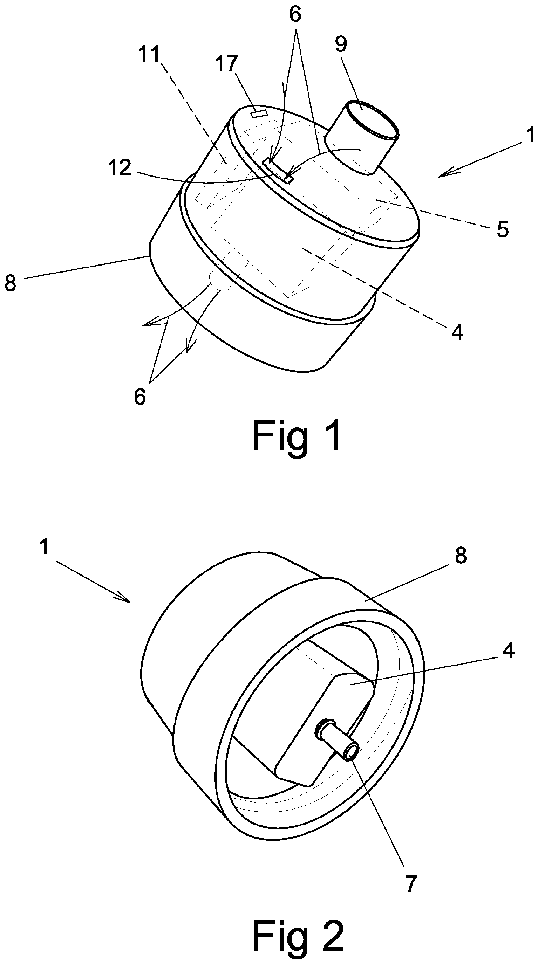

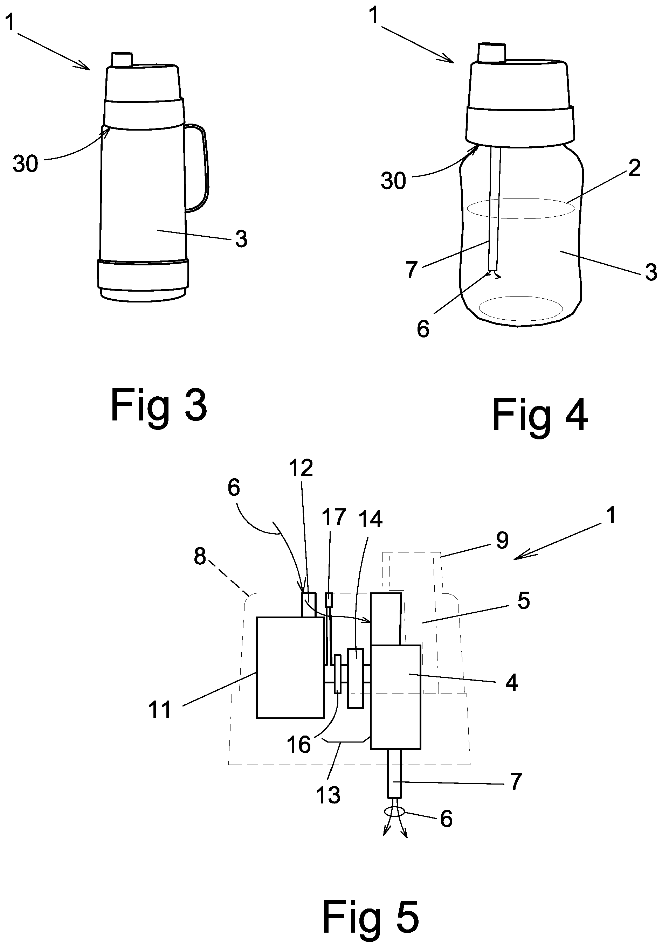

The device of the invention (1) for (see figs. 3 and 4) disinfection of a drink (2) in a container (3) consists of (see figs. 1, 2 and 5):
- an ozone generator(4),
- an air flow (6) impeller (5) (a small turbine, for example), connected to the ozone generator (4), to pass said flow (6) through it,
- a duct (7) arranged at the outlet of the ozone generator (4), to conduct the flow (6) of air with ozone towards the drink (2), and
- where the elements of the device (1) are mounted on a support (8) in the form of a lid or plug, suited to the mouth (30) of the container (3) (see figs. 3 and 4).

An advantageous embodiment of the invention has the support (8) including a means of adjustment it to the mouth (30) of the container (3) (such as threads or fittings) to achieve a good closure and improve use of the ozone, as it accumulates internally.

The support (8) may further include a mouthpiece (9) for drinking from when it is fitted to the mouth (30) of the container.

There is also a power supply for the ozone generator (4) and for the impeller (5) of the air flow (6), integrated in the support (8), so that the support (8) itself is the device and integrates all its elements. Said power source preferably includes a rechargeable battery (11) (preferably provided with the corresponding charging port (12)), a power supply circuit (13) that is connected to the ozone generator (4) and to the impeller (5) of the air flow (6), and an adapter (14) (voltage and/or current) to the characteristics of the ozone generator (4) and the impeller (5) of the air flow (6), arranged in said power supply circuit (13). Thus, the device can operate without being connected to the mains power, with all the advantages that this entails. Preferably the rechargeable battery (11) should include a charge level indicator, not shown.

Furthermore, the power supply circuit may include one or more elements selected from:
- a timer (16), to set a working time without having to monitor the operation, and
- a switch (17) to stop the operation of the device.

The air inlet for flow generation (6) will preferably be done through the charging port (12), to take advantage of the same hole.

Once the nature of the invention has been sufficiently described, as well as the way it is implemented in practice, it should be noted that the provisions previously indicated and represented in the attached drawings may undergo detailed modifications as long as they do not alter the fundamental principle.

## Claims

1. Device (1) for disinfection of a drink (2) in a container (3), **characterised by** including:
- an ozone generator(4),
- an impeller (5) of a flow (6) of air, connected to the ozone generator (4), to pass said flow (6) through it,
- a duct (7) arranged at the outlet of the ozone generator (4), to conduct the flow (6) of air with ozone towards the drink (2), and
- where the elements of the device (1) are mounted on a support (8) in the form of a lid or plug, suited to the mouth (30) of the container (3).

2. Device (1) for disinfection of a drink (2) in a container (3) according to claim 1 **where** the support (8) includes a means of adjustment to the mouth (30) of the container (3).

3. Device (1) for disinfection of a drink (2) in a container (3) according to any of the previous claims **where** the support (8) includes a mouthpiece (9).

4. Device (1) for disinfection of a drink (2) in a container (3) according to any of the previous claims **that** also includes a power source for the ozone generator (4) and for the impeller (5) of the air flow (6), integrated into the support (8).

5. Device (1) for disinfection of a drink (2) in a container (3) according to claim 4 **where** the power source includes a rechargeable battery (11), a power supply circuit (13) that is connected to the ozone generator (4) and the air flow (6) impeller (5), and an adapter (14) to the characteristics of the ozone generator (4) and of the impeller (5) of the flow (6) of air with ozone, arranged in said power supply circuit (13).

6. Device (1) for disinfection of a drink (2) in a container (3) according to claim 6 **where** the rechargeable battery (11) includes a charge level indicator.

7. Device (1) for disinfection of a drink (2) in a container (3) according to claims 5 or 6 **where** the power supply circuit also includes one or more elements selected from:
- a timer (16),
- a switch (17).
